# DEMANDE DE BREVET EUROPEEN

(11) **EP 0 692 849 A1**
(43) Date de publication de la demande: **17.01.1996**
(21) Numéro de dépôt: 95401507.9
(22) Date de dépôt: 26.06.1995
(51) Int. Cl.: H01R 23/10, H02J 7/00

(54) **Elément mobile de connexion électrique muni d'un câble liaison et d'une poignée de préhension**

(30) Priorité: 12.07.1994 FR 9408607
(71) Demandeur: Société d'Exploitation des Procédés Maréchal (SEPM), société anonyme, F-94417 Saint Maurice Cédex (FR)
(72) Inventeur: Crestin, Joseph, F-92170 Vanves (FR); Bienvenu, Didier, F-95420 Banthelu (FR)
(74) Mandataire: Chambon, Gérard

(57) **Abrégé**

L'invention concerne un élément mobile de connexion électrique (1) muni d'un câble de liaison (3) et d'une poignée de préhension (1b), l'une des extrémités constituant une tête (1a) pourvue de contacts (2) en vue d'assurer une connexion électrique et qui s'étend du côté opposé auxdits contacts par un prolongement formant ladite poignée (1b.

L'élément mobile selon l'invention est remaquable en ce que le câble de liaison (3) dudit élément mobile lui est connecté latéralement de manière que la poignée (1b) ne soit pas parcourue par ledit câble (3) ou des conducteurs de celui-ci.

## Description

L'invention concerne un élément mobile de connexion électrique muni d'un câble de liaison et d'une poignée de préhension, telle que par exemple une fiche de prise de courant ou une prise mobile d'un connecteur.

Il est connu pour certaines connexions électriques, de prévoir une poignée sur l'élément mobile, afin d'en améliorer la maniabilité.

C'est par exemple le cas d'une prise mobile de connecteur et plus particulièrement encore d'un connecteur de charge pour véhicule électrique.

Pour charger un véhicule électrique on a imaginé de concevoir la prise mobile destinée à venir dans le socle du connecteur disposé dans le véhicule, comme une poignée en forme de crosse dont l'une des extrémités est destinée à constituer une tête de connexion et l'autre extrémité est aménagée pour permettre l'entrée du câble de liaison coaxialement à ladite poignée.

On a aussi déjà imaginé des fiches qui sont sensiblement coaxiales au câble souple de liaison et qui sont prévues pour être enserrées à pleine main.

Lorsque l'on doit notamment utiliser des courants de forte intensité, les câbles présentent un poids et une rigidité importants qui rendent la maniabilité de l'élément mobile difficile.

C'est notamment le cas pour les prises mobiles des connecteurs de charge pour véhicules électriques pour lesquels les câbles sont d'autant plus gros que l'on utilise des courants de forte intensité en vue d'obtenir une charge la plus rapide possible.

En outre il peut être désagréable pour l'utilisateur que la poignée s'échauffe, du fait du passage à l'intérieur de celle-ci, du câble de liaison.

C'est pourquoi l'invention propose un élément mobile de connexion électrique muni d'un câble de liaison et d'une poignée de préhension, l'une des extrémités constituant une tête pourvue de contacts en vue d'assurer une connexion électrique et qui s'étend du côté opposé auxdits contacts par un prolongement formant ladite poignée, ledit élément étant remarquable en ce que son câble de liaison lui est connecté latéralement de manière que la poignée ne soit pas parcourue par ledit câble ou des conducteurs de celui-ci.

Selon un mode de réalisation le câble de liaison est un câble cylindrique mais pour des raisons de facilité d'emploi, et selon un mode de réalisation particulièrement intéressant les divers sous-câbles ou conducteurs constitutifs du câble de liaison sont disposés en ruban ou en nappe.

Comme déjà dit, l'élément mobile peut présenter une forme de crosse et dans ce cas selon un mode de réalisation, le câble est connecté au voisinage de l'angle rentrant formé par ladite crosse.

Comme déjà dit aussi un élément mobile de connexion selon l'invention est susceptible de constituer la fiche d'une prise de courant ou la prise mobile d'un connecteur, étant entendu que classiquement, une prise de courant est constituée d'une fiche et d'un socle et un connecteur d'une prise mobile et d'un socle.

Plus particulièrement dans le cas d'une prise mobile d'un connecteur de charge, par exemple pour véhicule électrique, le câble qui est relié à une borne de charge peut avantageusement être suspendu à un système de bras articulés ou à un système de poulies ou encore à un enrouleur de câble ou similaire.

L'invention sera bien comprise et d'autres particularités apparaîtront à la lecture de la description qui va suivre et qui se réfère aux dessins annexés dans lesquels:
- les figures 1 et 2 montrent respectivement en élévation et en perspective un premier mode de réalisation selon l'invention,
- La figure 3 montre en perspective un autre mode de réalisation,
- les figures 4, 5 et 6 montrent shématiquement trois systèmes de suspension et de rangement d'un câble de liaison d'un élément selon l'invention.

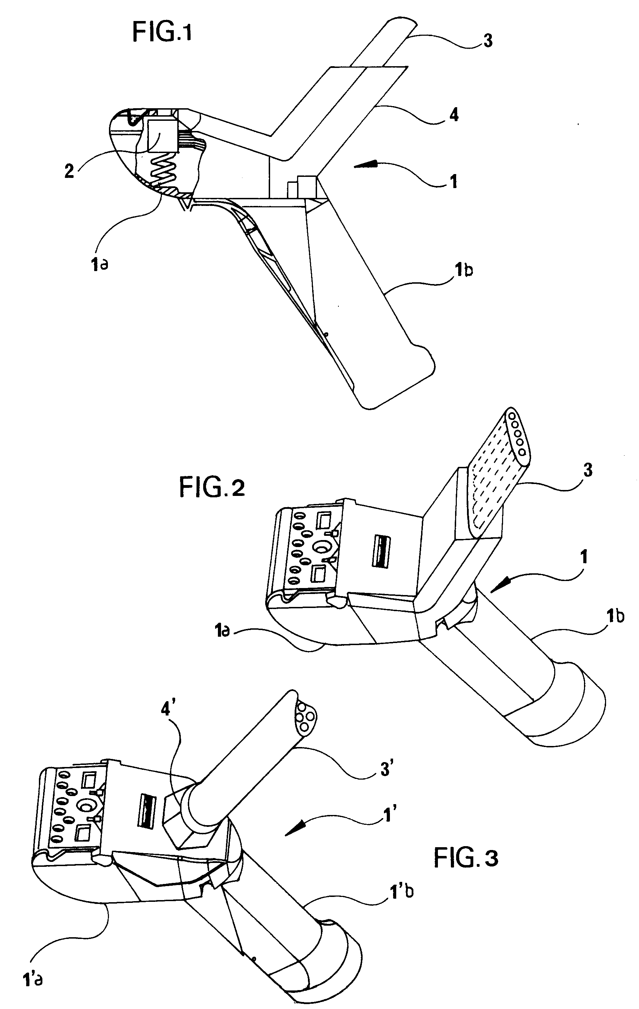

Les figures 1 à 3 montrent à titre d'exemple et selon deux modes de réalisation, une prise mobile de connecteur et plus particulièrement ici la prise mobile d'un connecteur de charge pour véhicule électrique, ladite prise étant destinée à venir dans les socles des connecteurs prévus dans les véhicules, tandis qu'elle est reliée par un câble souple à une source d'alimentation électrique.

Les prises 1 et 1' représentées, à titre d'exemple, sur les figures 1 à 3 sont recourbées en forme de crosse et présentent chacune une tête de connexion 1a, 1'a et une poignée 1b, 1'b.

La tête 1a, 1'a comporte des contacts tel le contact 2 représenté dans la partie arrachée de la figure 1.

En outre, comme le montrent les figures 2 et 3, mais ce n'est pas l'objet de l'invention, la tête 1a, 1'a est pourvue d'une grille de protection qui est prévue pour s'effacer au cours de l'enfichage.

Les dessins montrent bien que la tête 1a, 1'a et la poignée 1b, 1'b forment un angle et que le câble de liaison et d'alimentation 3, 3' sort de la prise sensiblement à l'arrière et au niveau de la jonction entre ladite tête et ladite poignée, c'est-à-dire ici dans l'angle rentrant formé par la prise mobile.

Dans le mode de réalisation des figures 1 et 2, le câble 3 présente la forme d'un ruban ou d'une nappe, les divers conducteurs ou sous-câbles constitutifs étant disposés à plat.

Dans le mode de réalisation de la figure 3, au contraire, le câble 3' est cylindrique.

Par ailleurs et à titre d'exemple, le mode de réalisation des figures 1 et 2 est pourvu d'un guide 4 pour le câble 3 tandis que le mode de réalisation de la figure 3 est pourvu d'un moyen de serrage 4'.

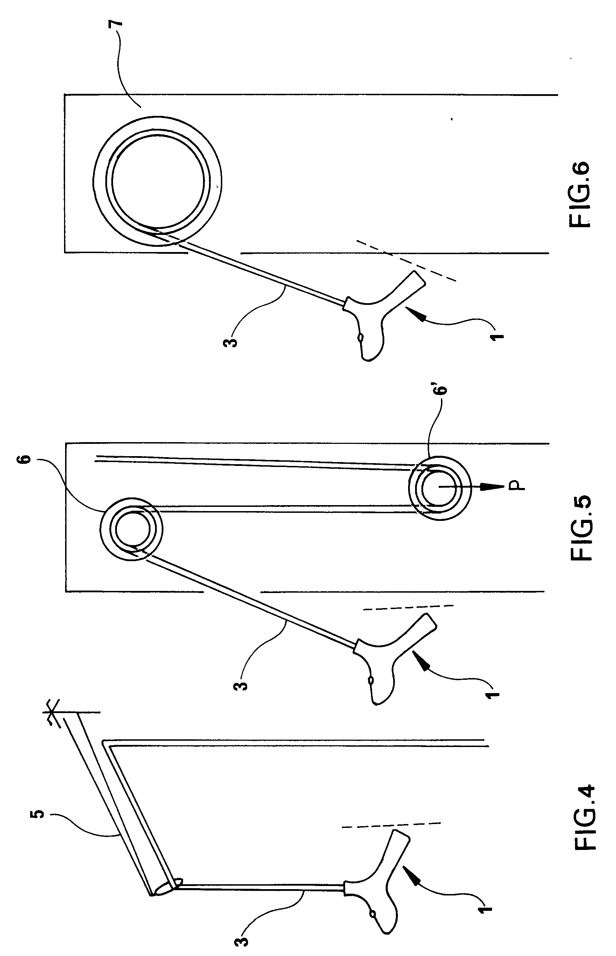

Les figures 4, 5 et 6 montrent des systèmes de suspension respectivement à bras articulés 5 (figure 4) ou à poulies 6, 6' (figure 5) ou encore à enrouleur 7 (figure 6), ce dernier étant tout à fait adapté au mode de réalisation des figures 1 et 2, étant donné la souplesse du câble ruban 3.

On comprend aisément l'intérêt des systèmes représentés sur les figures 5, 6 et 7.

L'utilisateur peut ainsi saisir facilement la prise 1 par sa poignée 1b au moment de son utilisation, ladite prise pouvant ensuite reprendre sa position initiale, et être prête pour une nouvelle utilisation.

On comprend aussi que le câble ainsi disposé offre une meilleure flexibilité en minimisant le couple résistant du câble.

Il est clair que si les modes de réalisation décrits concernent plus particulièrement une prise de connecteur, il pourrait bien sûr s'agir d'une fiche de prise de courant, voire même d'un prolongateur, sans d'ailleurs nécessairement avoir une forme de crosse.

## Revendications

**1)** Elément mobile de connexion électrique (1,1') muni d'un câble de liaison (3,3') et d'une poignée de préhension (1b,1'b), l'une des extrémités constituant une tête (1a,1'a) pourvue de contacts (2) en vue d'assurer une connexion électrique et qui s'étend du côté opposé auxdits contacts par un prolongement formant ladite poignée (1b,1'b), caractérisé en ce que le câble de liaison (3,3') dudit élément mobile est connecté latéralement de manière que la poignée (1b, l'b) ne soit pas parcourue par ledit câble (3,3') ou des conducteurs de celui-ci.

**2)** Elément mobile de connexion selon la revendication 1, caractérisé en ce que le câble de liaison (3') est un câble cylindrique.

**3)** Elément mobile de connexion selon la revendication 1, caractérisé en ce que le câble de liaison (3) est un câble dont les divers conducteurs ou sous-câbles constitutifs sont disposés en ruban ou en nappe.

**4)** Elément mobile de connexion selon l'une des revendications 1 à 3 en forme de crosse, caractérisé en ce que le câble (3,3') est connecté au voisinage de l'angle rentrant formé par ladite crosse.

**5)** Elément mobile de connexion selon l'une des revendications 1 à 4, caractérisé en ce qu'il constitue la fiche d'une prise de courant.

**6)** Elément mobile de connexion selon l'une des revendications 1 à 4, caractérisé en ce qu'il constitue la prise mobile d'un connecteur.

**7)** Elément mobile de connexion selon la revendication 6, caractérisé en ce que son câble de liaison (3) est suspendu à un système de bras articulés (5).

**8)** Elément mobile de connexion selon la revendication 6, caractérisé en ce que son câble de liaison (3) est suspendu à un système de poulies (6,6').

**9)** Elément mobile de connexion selon la revendication 6, caractérisé en ce que son câble de liaison (3) est suspendu à un enrouleur (7) de câble.
